(19) Europäisches Patentamt
European Patent Office
Office européen des brevets

(11) **EP 1 927 933 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
***G06K 7/10*** *(2006.01)*

(21) Anmeldenummer: **07020084.5**

(22) Anmeldetag: **13.10.2007**

(54) **Barcodelesegerät**

Bar code reader

Appareil de lecture d'un code à barres

(84) Benannte Vertragsstaaten:
**AT CH DE IT LI**

(30) Priorität: **28.11.2006 DE 102006055992**

(43) Veröffentlichungstag der Anmeldung:
**04.06.2008 Patentblatt 2008/23**

(73) Patentinhaber: **Leuze electronic GmbH + Co. KG**
**73277 Owen/Teck (DE)**

(72) Erfinder:
• **Claus, Armin**
**72622 Nürtingen (DE)**

• **Moll, Georg**
**72655 Altdorf (DE)**

(74) Vertreter: **Ruckh, Rainer Gerhard**
**Fabrikstrasse 18**
**73277 Owen/Teck (DE)**

(56) Entgegenhaltungen:
**WO-A-94/27166      DE-A1- 10 101 985**
**US-B1- 6 454 169**

EP 1 927 933 B1

**Beschreibung**

Die Erfindung betrifft ein Verfahren zum Betrieb eines Barcodelesegeräts.

Ein derartiges Barcodelesegerät ist aus der DE 101 01 985 A1 bekannt. Es weist einen Sendelichtstrahlen emittierenden Sender sowie einen Empfangslichtstrahlen empfangenden Empfänger auf. Um einen vorzugsweise flächigen Abtastbereich abzutasten, werden die Sendelichtstrahlen über eine Ablenkeinheit geführt. Dadurch werden die Sendelichtstrahlen periodisch innerhalb des Abtastbereichs geführt, so dass in diesem Abtastbereich angeordnete Gegenstände detektiert werden können. Die Ablenkeinheit besteht aus einem motorisch getriebenen, rotierenden Polygonspiegelrad mit mehreren identischen Spiegelflächen. Die Sendelichtstrahlen und Empfangslichtstrahlen werden jeweils über dieselbe Spiegelfläche abgelenkt. Durch die Rotationsbewegung des Polygonspiegelrads werden innerhalb einer Abtastperiode die Sendelichtstrahlen über die gesamte Breite der jeweiligen Spiegelfläche geführt.

Generell erfolgt zur Detektion von Barcodes eine Auswertung von Empfangssignalen, die während einer Vielzahl von aufeinander folgenden Abtastperioden generiert werden. Um eine fehlerfreie Auswertung der Empfangssignale vornehmen zu können, muss jeweils der Start- und Endzeitpunkt eines Scans, das heißt der während einer Abtastperiode ermittelten Empfangssignale, bekannt und definiert sein.

Um dies zu gewährleisten, werden bei dem Barcodelesegerät der DE 101 01 985 A1 während jeder Periode die Sendelichtstrahlen von der Ablenkeinheit direkt auf eine außerhalb des Abtastbereichs angeordnete Empfangselementanordnung geführt, aus deren Ausgangssignalen ein Triggersignal abgeleitet wird.

Die Empfangselementanordnung ist beispielsweise von einem Empfangselement gebildet, das an einer vorgegebenen Stelle im Barcodelesegerät angeordnet ist. Das Triggersignal wird vorzugsweise durch eine Schwellwertbewertung der am Ausgang des Empfangselements anstehenden Signale gewonnen. Das Triggersignal wird dadurch immer in einer vorgegebenen, festen Ablenkposition der Ablenkeinheit innerhalb jeder Abtastperiode generiert. Dadurch liefert das für jede Spiegelfläche abgeleitete Triggersignal einen Bezugspunkt, aus welchem der Startzeitpunkt und auch das Ende eines Scans bestimmt werden können.

Bei einem idealen Polygonspiegelrad mit exakt identischen Spiegelflächen wird für jede Abtastperiode das Triggersignal auf identische Weise generiert, beispielsweise jeweils exakt am Anfang eines Scans. Da die Spiegelflächen des Polygonspiegelrads aufgrund unvermeidlicher Toleranzen hinsichtlich ihrer Oberflächenbeschaffenheit variieren, variieren entsprechend auch die für die einzelnen Abtastperioden durch die Sendelichtstrahlen an dem Empfangselement generierten Signale hinsichtlich ihrer Anstiegszeiten und Amplituden.

Die aus diesen Signalen durch die Schwellwertbewertung gewonnenen Triggersignale, die für einzelne Spiegelflächen erhalten werden, sind somit mit einem Jitter behaftet. Da die Triggersignale die Startzeitpunkte für die einzelnen Scans definieren, sind auch diese und somit auch die zeitlichen Folgen der Empfangssignale, mit einem entsprechenden Jitter behaftet.

Außerdem können mechanische Toleranzen von Bauteilen zu einem unrunden Lauf des Polygonspiegelrads führen, was ebenfalls zu einem Jitter der Empfangssignale führt.

Ein derartiger Jitter führt insbesondere dann zu Fehlmessungen, wenn ein Barcode nicht mit einem Scan vollständig erfasst werden kann, sondern beispielsweise aufgrund von Detektion oder Verschmutzungen des Barcodes die Barcodeinformation aus Teilinformationen, die bei mehreren aufeinander folgenden Scans erhalten werden, zusammengesetzt werden müssen. Aufgrund des Jitters der Startzeitpunkte der einzelnen Scans wird die Gewinnung der Barcodeinformation aus den Teilinformationen erheblich erschwert oder sogar unmöglich.

Die WO 94/27166A beschreibt ein Verfahren zum Betrieb eines Barcodelesegeräts mit einem Polygenspiegelrad, wobei durch Führen von Lichtstrahlen eines Senders über die Spiegelflächen des Polygonspiegelrads einzelne Scans zur Detektion von Barcodes durchgeführt werden. Mittels Triggerdioden werden für die einzelnen Scans Start- und Stoppsignale generiert. Einmal pro Umdrehung des Polygonspiegelrads wird die absolute Position mittels eines am Polygonspiegelrad befestigten Pins und einer Gabellichtschranke festgestellt.

Aus der US-B1-6 454 169 ist ein Verfahren zum Betrieb eines Barcodelesegeräts mit einem Polygonspiegelrad bekannt, bei dem mittels einer ausgewählten Spiegelfläche dieses Polygonspiegelrads ein Triggersignal zur Bestimmung einer Referenzposition des Polygonspiegelrads generiert wird.

Der Erfindung liegt die Aufgabe zugrunde, ein Verfahren der eingangs genannten Art so auszubilden, dass die Messsicherheit bei der Barcodedetektion mittels eines Barcodelesegeräts erhöht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zum Betrieb eines Barcodelesegeräts. Dieses umfasst einen Sendelichtstrahlen empfangenden Sender, einen Empfangslichtstrahlen empfangenden Empfänger, eine Auswerteeinheit zur Auswertung der Empfangssignale des Empfängers sowie eine Ablenkeinheit zur periodischen Ablenkung der Sendelichtstrahlen innerhalb eines Abtastbereichs. Die Ablenkeinheit ist von einem motorisch getriebenen rotierenden Polygonspiegelrad mit mehreren gleichen Spiegelflächen gebildet. Innerhalb einer Abtastperiode werden die Sendelichtstrahlen jeweils über eine Spiegelfläche geführt und überstreichen so den Abtastbereich. Während jeder Periode werden die Sendelichtstrahlen in einer vorgegebenen Ablenkposition auf ein Referenzelement geführt, wodurch ein Triggersignal generiert wird, aus welchem der Startzeitpunkt eines von der Folge der während einer Abtastperiode ermittelten Empfangssignale gebildeten Scans bestimmt wird. Aus dem Triggersignal werden für eine ausgewählte Spiegelfläche Korrekturwerte für die Zeitpunkte der Empfangssignale der Scans der weiteren Spiegelflächen abgeleitet.

Der Grundgedanke der Erfindung besteht darin, Korrekturwerte aus dem Triggersignal, für eine bestimmte, ausgewählte Spiegelfläche abzuleiten, die dann zur Korrektur der Zeitpunkte der Empfangssignale der Scans für alle anderen Spiegelflächen des Polygonspiegelrads verwendet werden. Da somit die Korrekturwerte immer aus Signalen abgeleitet sind, die durch Führen der Sendelichtstrahlen über jeweils dieselbe Stelle derselben Spiegelfläche des Polygonspiegelrads erhalten werden, sind diese Korrekturwerte nicht mit einem Jitter behaftet. Somit können die Startsignale für Scans, die aus Triggersignalen, die durch Führen der Sendelichtstrahlen über unterschiedliche Spiegelflächen des Polygonspiegelrads gewonnen werden, abgeleitet werden und daher aufgrund von Toleranzen der Spiegelflächen mit einem Jitter behaftet sind, durch die Korrekturwerte derart renormiert werden, dass die Jitter systematisch eliminiert werden.

Durch die Eliminierung der Jitter für die einzelnen Scans wird die Zuverlässigkeit und Nachweissicherheit der mit dem Barcodelesegerät durchgeführten Barcodedetektion erheblich gesteigert. Insbesondere ist damit auch eine sichere Barcodedetektion für den Fall gewährleistet, dass aufgrund von Verschmutzungen oder lokalen Defekten eines Barcodes dessen Barcodeinformation nicht in einem Scan erfasst werden kann, sondern aus Teilinformationen aus mehreren vorzugsweise aufeinander folgenden Scans zusammen gesetzt werden muss. Bei einem derartigen Zusammensetzen von Teilinformationen würde ein Jitter in den Startzeitpunkten zu Fehldetektionen führen, da dadurch die Teilinformationen aus den einzelnen Scans zeitlich gegeneinander verschoben wären, was eine korrekte Kombination der Teilinformationen erschweren würde.

Besonders vorteilhaft wird als Bezugsgröße zur Bildung der Korrekturwerte die Zeitdifferenz $\Delta t_1$ des Triggersignals und des ersten Empfangssignals des Scans für die ausgewählte Spiegelfläche gebildet. Zur Bildung der Korrekturwerte werden dann die Zeitdifferenzen $\Delta t_n$ (n = 2 bis 8) der Triggersignale und der ersten Empfangssignale der weiteren Scans gebildet und von diesen jeweils die Bezugsgröße subtrahiert.

Die Bestimmung der Korrekturwerte erfolgt vorteilhaft während eines Kalibriervorgangs, der vor der Inbetriebnahme des Barcodelesegeräts durchgeführt wird.

Die Bestimmung der Korrekturwerte erfolgt anhand von Signalen, die bei Führen der Sendelichtstrahlen über eine ausgewählte, das heißt bestimmte Spiegelfläche des Polygonspiegelrads erhalten werden. Die Auswahl der Spiegelflächen erfolgt vorteilhaft anhand eines Markierungssignals, zu dessen Generierung eine Markierung vorgesehen ist, wobei diese vorteilhaft an der jeweiligen Spiegelfläche direkt angebracht ist. Besonders vorteilhaft weist zur Ausbildung der Markierung wenigstens ein Ausschnitt der Innenseite der ausgewählten Spiegelfläche eine von den Innenseiten der übrigen Spiegelflächen unterschiedliche Oberflächenbeschaffenheit auf, wobei die unterschiedlichen Oberflächenbeschaffenheiten mit einem das Markierungssignal generierenden Sensor detektiert werden. Dadurch ist eine zuverlässige Identifikation der ausgewählten Spiegelflächen gewährleistet. Da die hierfür erforderlichen Komponenten im Innern des Polygonspiegelrads angeordnet sind, behindern diese auch die Barcodedetektion nicht.

Die Erfindung wird im Nachstehenden anhand der Zeichnungen erläutert. Es zeigen:

Figur 1: Schematische Darstellung eines Ausführungsbeispiels eines Barcodelesegeräts.

Figur 2: Zeitdiagramme von Triggersignalen, Empfangssignalen sowie eines Markierungssignals für das Barcodelesegerät gemäß Figur 1.

Figur 3: Schematische Darstellung von unkorrigierten Empfangssignalen, die für verschiedene Abtastungen mit dem Barcodelesegerät gemäß Figur 1 erhalten werden.

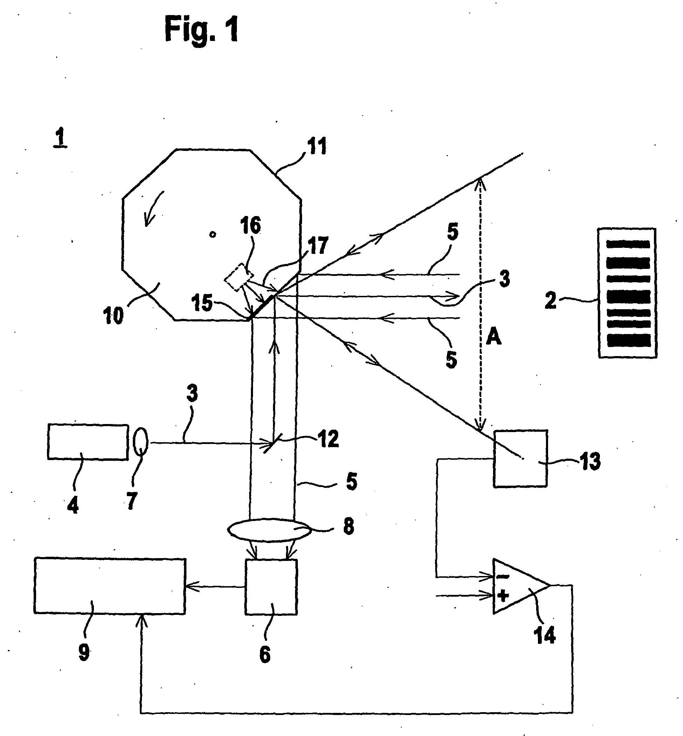

Figur 1 zeigt ein Ausführungsbeispiel eines Barcodelesegeräts 1 zum Erfassen von Barcodes 2 innerhalb eines Abtastbereichs A.

Die Barcodes 2 weisen eine Folge von hellen und dunklen Linienelementen auf. Vorzugsweise bestehen die Barcodes 2 aus einer Folge von schwarzen und weißen Linienelementen.

Die Barcodes 2 werden innerhalb des Abtastbereichs A von dem Barcodelesegerät 1 periodisch abgetastet. Hierzu weist das Barcodelesegerät 1 einen Sendelichtstrahlen 3 emittierenden Sender 4 und einen Empfangslichtstrahlen 5 empfangenden Empfänger 6 auf. Der Sender 4 ist von einer Laserdiode gebildet, der Empfänger 6 besteht aus einer Fotodiode oder dergleichen. Zur Strahlformung der Sendelichtstrahlen 3 ist dem Sender 4 eine Sendeoptik 7 nachgeordnet. Dem Empfänger 6 ist eine Empfangsoptik 8 vorgeordnet, mittels derer die Empfangslichtstrahlen 5 auf den Empfänger 6 fokussiert werden.

Der Empfänger 6 ist an eine Auswerteeinheit 9 angeschlossen. Die Auswerteeinheit 9 ist von einem Mikrocontroller oder dergleichen gebildet.

Zur Erfassung der Barcodes 2 werden die Sendelichtstrahlen 3 periodisch innerhalb des Abtastbereichs geführt. Hierzu ist eine Ablenkeinheit vorgesehen, über welche sowohl die Sendelichtstrahlen 3 als auch die Empfangslichtstrahlen 5 geführt sind.

Die Ablenkeinheit ist von einem motorisch getriebenen, rotierenden Polygonspiegelrad 10 gebildet. Das Polygonspiegelrad 10 weist mehrere identische Spiegelflächen 11 auf, wobei im vorliegenden Beispiel acht derartiger Spiegelflächen 11 vorgesehen sind.

Die Sende- 3 und Empfangslichtstrahlen 5 werden jeweils über dieselbe Spiegelfläche 11 des Polygonspiegelrads 10 geführt. Dabei verlaufen die Strahlachsen der auf das Polygonspiegelrad 10 auftreffenden Sendelichtstrahlen 3 und die am Polygonspiegelrad 10 reflektierten Empfangslichtstrahlen 5 koaxial zueinander. Die koaxiale Strahlführung der Sende- 3 und Empfangslichtstrahlen 5 in diesem Bereich wird beispielsweise mittels eines Strahlteilers 12, der wie in Figur 1 dargestellt die Sendelichtstrahlen 3 ablenkt, erreicht. Die Empfangslichtstrahlen 5, die am Polygonspiegelrad 10 reflektiert werden, werden am Strahlteiler 12 vorbei zum Empfänger 6 geführt.

Durch die Drehbewegung des Polygonspiegelrads 10 werden die Sendelichtstrahlen 3 periodisch innerhalb eines Winkelbereichs abgelenkt, welcher den Abtastbereich A bildet. Die Größe des Winkelbereichs ist durch die Anzahl der Spiegelflächen 11 des Polygonspiegelrads 10 vorgegeben.

Mit den Sendelichtstrahlen 3 wird ein im Abtastbereich angeordneter Barcode 2 periodisch abgetastet. Die am Barcode 2 reflektierten Empfangslichtstrahlen 5 weisen entsprechend dem Muster der Linienelemente des Barcodes 2 eine Amplitudenmodulation auf. Dementsprechend weisen auch die Empfangssignale am Ausgang des Empfängers 6 anstehenden, durch die Empfangslichtstrahlen 5 generierten Empfangssignale eine entsprechende Amplitudenmodulation auf. Diese Amplitudenmodulation der Empfangssignale wird in der Auswerteeinheit 9 zur Dekodierung des jeweiligen Barcodes 2 ausgewertet.

Dabei werden in der Auswerteeinheit 9 jeweils die während einer Abtastperiode registrierten Empfangssignale zusammen ausgewertet.

Damit die während der Abtastung des Barcodes 2 registrierten Empfangssignale eindeutig den einzelnen Abtastperioden zugeordnet werden können, sind entsprechend Triggersignale erforderlich.

Diese Triggersignale werden während jeder Abtastperiode in jeweils derselben Winkelstellung der Spiegelfläche 11, über welche die Sendelichtstrahlen 3 während der jeweiligen Abtastperiode geführt sind, generiert. Anhand dieser Triggersignale ist feststellbar, wann eine Abtastperiode beginnt, bzw. wann diese Abtastperiode endet.

Zur Generierung der Triggersignale ist als Referenzelement ein Empfangselement 13 vorgesehen, welches im vorliegenden Ausführungsbeispiel von einem Fotoelement gebildet ist. Das Signal am Ausgang des Empfangselements 13 wird zur Generierung eines binären Triggersignals mit einem Schwellwert bewertet, der in einem Komparator 14 erzeugt wird, das an die Auswerteeinheit 9 angeschlossen ist.

Anstelle des Empfangselements 13 kann dort ein lichtreflektierendes Element vorgesehen sein, welches einen vorgegebenen Anteil der Sendelichtstrahlen 3 zum Empfänger 6 reflektiert.

Das Empfangselement 13 ist im vorliegenden Fall so angeordnet, dass die Sendelichtstrahlen 3 jeweils am Anfang einer Abtastperiode auf das Empfangselement 13 treffen und dann das Triggersignal generieren. Dementsprechend bilden die fallenden Flanken der einzelnen Triggersignale die Startzeitpunkte einer Abtastung und damit eines Scans, der innerhalb einer Abtastperiode durchgeführt wird.

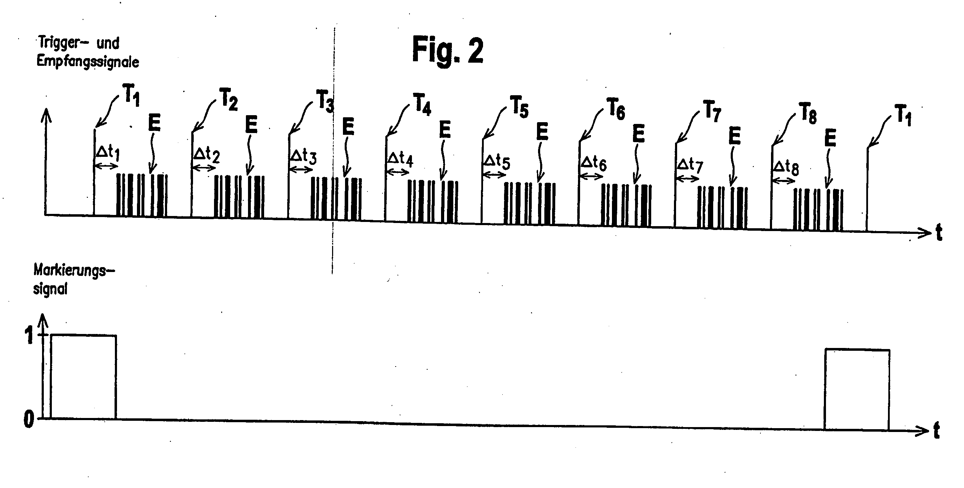

Dies ist im oberen Zeitdiagramm von Figur 2 dargestellt. Figur 2 zeigt dabei die Triggersignale $T_1$ - $T_8$, die bei Führen der Sendelichtstrahlen 3 über die einzelnen Spiegelflächen 11 auf das Empfangselement 13 generiert werden. Entsprechend der Rotationsbewegung des Polygonspiegelrads 10 werden periodisch nacheinander entsprechend der Anzahl der Spiegelflächen 11 acht Triggersignale $T_1$ - $T_8$ generiert. Die Zeitpunkte der fallenden Flanken der Triggersignale $T_1$ - $T_8$ definieren jeweils den Anfang einer Abtastperiode und bilden damit so genannte SOS(Start of Scan)-Signale. Während eines jeweils mit einem Triggersignal beginnenden Scans werden die von einem Barcode stammenden, in Figur 2 mit E bezeichneten Empfangssignale erhalten.

Da bei der Generierung der Triggersignale $T_1$ - $T_8$ die Sendelichtstrahlen 3 jeweils über die verschiedenen Spiegelflächen 11 des Polygonspiegelrads 10 geführt sind, und diese Spiegelflächen 11 aufgrund unvermeidlicher Toleranzen Unterschiede hinsichtlich ihrer Oberflächenbeschaffenheiten aufweisen, variieren die Signale des Empfangselements 13, die durch die über die verschiedenen Spiegelflächen 11 geführten Sendelichtstrahlen 3 generiert werden, hinsichtlich ihrer Signalformen. Dementsprechend variieren auch die aus den Signalen des Empfangselements 13 durch die Schwellwertbewertung gewonnenen Triggersignale $T_1$ - Tg.

Dies führt zu einem Jitter der SOS-Signale $T_1$ - $T_8$, das heißt diese SOS-Signale folgen nicht in exakt identischen Zeitintervallen aufeinander.

Dementsprechend sind auch die zeitlichen Folgen der Empfangssignale E, die während eines Scans innerhalb einer Abtastperiode erhalten werden, mit einem solchen Jitter behaftet.

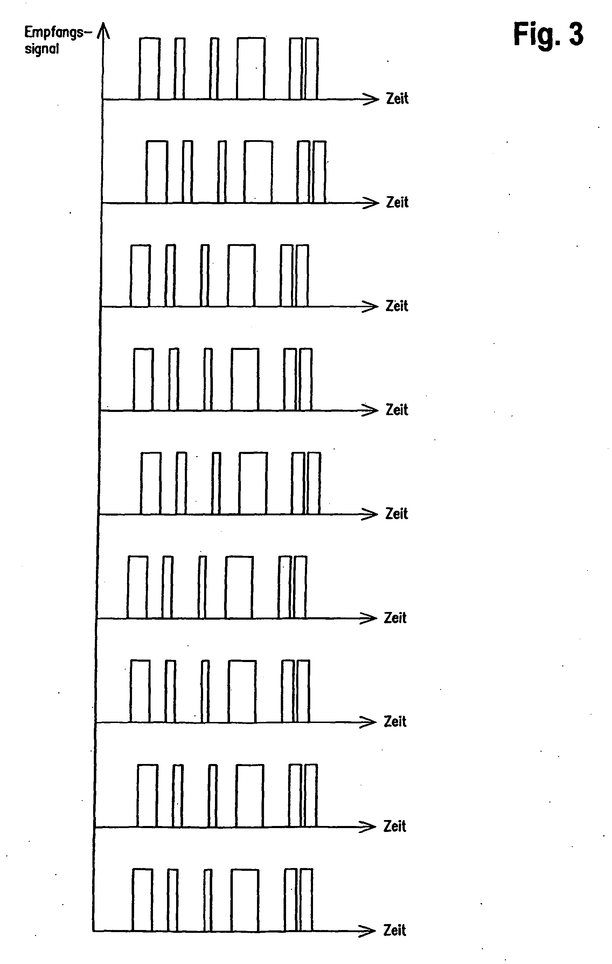

Dies ist schematisch in Figur 3 dargestellt. Die Triggersignale werden zur Triggerung des Einlesevorgangs der Empfangssignale in die Auswerteeinheit 9 verwendet, wobei die Empfangssignale bevorzugt über einen Analog-DigitalWandler in die Auswerteeinheit 9 eingelesen werden. Wie aus Figur 3 ersichtlich, werden durch diese Triggerung jeweils Scans in Form von Folgen von Empfangssignalen innerhalb einer Abtastperiode erhalten, wobei der Startzeitpunkt jedes Scans durch ein SOS-Signal $T_1$ - $T_8$ definiert ist. Da diese SOS-Signale mit einem Jitter behaftet sind, sind die Empfangssignale der einzelnen Abtastperiode entsprechend gegeneinander verschoben, wie aus Figur 3 ersichtlich ist. Eine derartige Verschiebung führt insbesondere dann zu Fehldetektionen, wenn die während der einzelnen Abtastperioden erhaltenen Empfangssignale nur Teilinformationen eines Barcodes 2 enthalten, so dass diese Teilinformationen aus unterschiedlichen Scans zur Dekodierung eines Barcodes 2 zusammengesetzt werden müssen.

Zur Elimination derartiger Störeinflüsse werden die Startzeitpunkte des einzelnen Scans und damit die Zeitverläufe der Empfangssignale mit Korrekturwerten korrigiert.

Diese Korrekturwerte werden von Signalen des Empfangselements 13 abgleitet, die von Sendelichtstrahlen 3 generiert werden, die immer über dieselbe Spiegelfläche 11 des Polygonspiegelrads 10 geführt sind. Diese ausgewählte Spiegelfläche 11 wird anhand einer spezifischen Markierung gekennzeichnet und ist damit eindeutig identifizierbar.

Im vorliegenden Fall ist die ausgewählte Spiegelfläche 11 derart gekennzeichnet, dass als Markierung ein Teil der Innenseite der Spiegelfläche 11 mit einer Kontrastfläche 15 versehen ist, deren Kontrast sich eindeutig von den Kontrasten der Oberflächen der Innenseiten aller anderen Spiegelflächen 11 unterscheidet. Die Innenseiten der Spiegelflächen 11 werden durch einen Sensor erfasst, der im vorliegenden Fall von einer stationär im Innenraum des Polygonspiegelrads 10 angeordneten Reflexionslichtschranke 16 gebildet ist. Diese Reflexionslichtschranke 16 sitzt außerhalb des Mittelpunkts des Polygonspiegelrads 16. Durch die Drehbewegung des Polygonspiegelrads 16 werden die Spiegelflächen 11 an der Reflexionsschranke 16 vorbei bewegt, so dass dann deren Innenseiten mit den von der Reflexionslichtschranke 16 emittierten Lichtstrahlen 17 detektiert werden.

Dadurch wird das im unteren Diagramm von Figur 2 dargestellte Markierungssignal generiert. Die ausgewählte Spiegelfläche 11 ist im vorliegenden Fall von der ersten Spiegelfläche 11 gebildet, die das erste Triggersignal $T_1$ generiert. Die Anordnung der Reflexionslichtschranke 16 und die Divergenz deren Lichtstrahlen 17 einerseits sowie die Ausdehnung der Kontrastfläche 15 andererseits, sind so gewählt, dass das Markierungssignal in jedem Fall wie in Figur 2 dargestellt, während der gesamten Dauer des Triggersignals $T_1$ ansteht, jedoch nicht dann ansteht, wenn die übrigen Triggersignale $T_2$ - $T_8$ anstehen.

Somit können durch das Markierungssignal, das in der Auswerteeinheit 9 ausgewertet wird, die Triggersignale $T_1$, die durch die Führung der Sendelichtstrahlen 3 über die erste, das heißt ausgewählte Spiegelfläche 11 geführt werden, eindeutig identifiziert werden.

Prinzipiell könnte eine derartige Reflexionslichtschranke 16 auch außerhalb des Polygonspiegelrads 10 angeordnet sein und eine Markierung an der Außenseite einer ausgewählten Spiegelfläche 11 abtasten.

In einem Kalibriervorgang, der vorzugsweise vor Inbetriebnahme des Barcodelesegeräts 1 erfolgt, werden wie im oberen Diagramm dargestellt, die Triggersignale $T_1$ für die durch das Markierungssignal gekennzeichnete ausgewählte Spiegelfläche zur Ermittlung von Korrekturwerten herangezogen.

Hierzu wird zunächst, wie im oberen Diagramm von Figur 2 dargestellt, als Bezugsgröße die Zeitdifferenz $\Delta t_1$ zwischen dem Triggersignal $T_1$ und dem ersten Empfangssignal des Scans für die ausgewählte Spiegelfläche 11 gebildet.

Die Korrekturwerte $K_n$ (n = 2, ... 8) werden dann gemäß der Beziehung

$$K_n = \Delta t_n - \Delta t_1 \ (n = 2, \dots 8)$$

berechnet und dauerhaft gespeichert.

Prinzipiell kann diese Art der Korrekturwertermittlung mehrfach über mehrere Umdrehungen des Polygonspiegelrads 10 durchgeführt werden, so dass dann eine Mittelung der Korrekturwerte $K_n$ für die einzelnen Umdrehungen erfolgen kann.

Im nachfolgenden Arbeitsbetrieb des Barcodelesegeräts 1 werden dann die Startzeitpunkte oder die Zeitpunkte der einzelnen Empfangssignale der einzelnen Scans innerhalb der einzelnen Abtastperioden so renormiert, dass diese um die jeweiligen Korrekturwerte verschoben werden. Hiermit kann der Jitter der SOS-Signale systematisch eliminiert werden, da die Korrekturwerte aus Signalen des Empfangselements 13 abgeleitet sind, die immer von über dieselbe, nämlich die ausgewählte Spiegelfläche 11, geführten Sendelichtstrahlen 3 generiert werden.

Bezugszeichenliste

(1) Barcodelesegerät
(2) Barcode
(3) Sendelichtstrahlen
(4) Sender
(5) Empfangslichtstrahlen
(6) Empfänger
(7) Sendeoptik
(8) Empfangsoptik
(9) Auswerteeinheit
(10) Polygonspiegelrad
(11) Spiegelfläche
(12) Strahlteiler
(13) Empfangselement
(14) Komparator
(15) Kontrastfläche
(16) Reflexionslichtschranke
(17) Lichtstrahlen

**Patentansprüche**

1.  Verfahren zum Betrieb eines Barcodelesegeräts, welches einen Sendelichtstrahlen empfangenden Sender, einen Empfangslichtstrahlen empfangenden Empfänger, eine Auswerteeinheit zur Auswertung der Empfangssignale des Empfängers sowie eine Ablenkeinheit zur periodischen Ablenkung der Sendelichtstrahlen innerhalb eines Abtastbereichs aufweist, wobei die Ablenkeinheit von einem motorisch getriebenen rotierenden Polygonspiegelrad mit mehreren gleichen Spiegelflächen gebildet ist, wobei innerhalb einer Abtastperiode die Sendelichtstrahlen jeweils über eine Spiegelfläche geführt werden und so den Abtastbereich überstreichen, und wobei während jeder Periode die Sendelichtstrahlen in einer vorgegebenen Ablenkposition auf ein Referenzelement geführt werden, wodurch ein Triggersignal generiert wird, aus welchem der Startzeitpunkt eines von der Folge der während einer Abtastperiode ermittelten Empfangssignale gebildeten Scans bestimmt wird, **dadurch gekennzeichnet, dass** aus dem Triggersignal für eine ausgewählte Spiegelfläche (11) Korrekturwerte für die Zeitpunkte der Empfangssignale der Scans der weiteren Spiegelflächen (11) abgeleitet werden.

2.  Verfahren nach Anspruch 1, **dadurch gekennzeichnet, dass** die Triggersignale die Startzeitpunkte der einzelnen Scans bilden.

3.  Verfahren nach Anspruch 2, **dadurch gekennzeichnet, dass** als Bezugsgröße zur Bildung der Korrekturwerte die Zeitdifferenz $\Delta t_1$ des Triggersignals und des ersten Empfangssignals des Scans für die ausgewählte Spiegelfläche gebildet wird.

4.  Verfahren nach Anspruch 3, **dadurch gekennzeichnet, dass** zur Bildung der Korrekturwerte die Zeitdifferenzen $\Delta t_n$ (n = 2 bis 8) der Triggersignale und der ersten Empfangssignale der weiteren Scans gebildet werden und von diesen jeweils die Bezugsgröße subtrahiert wird.

5.  Verfahren nach einem der Ansprüche 1 bis 5, **dadurch gekennzeichnet, dass** die Ermittlung der Korrekturwerte während eines Kalibrierungsvorgangs erfolgt.

6.  Verfahren nach Anspruch 5, **dadurch gekennzeichnet, dass** während des auf den Kalibriervorgang folgenden Arbeitsbetrieb des Barcodelesegeräts die Zeitpunkte der Empfangssignale der Scans für die weiteren Spiegelflächen mit den jeweiligen Korrekturwerten korrigiert werden.

7.  Verfahren nach Anspruch 6, **dadurch gekennzeichnet, dass** die Auswahl einer Spiegelfläche durch eine Markierung erfolgt.

8.  Verfahren nach Anspruch 7, **dadurch gekennzeichnet, dass** anhand der Markierung ein Markierungssignal generiert wird, welches die ausgewählte Spiegelfläche (11) kennzeichnet.

9.  Verfahren nach einem der Ansprüche 7 oder 8, **dadurch gekennzeichnet, dass** zur Ausbildung der Markierung wenigstens ein Ausschnitt der Innenseite der ausgewählten Spiegelfläche (11) eine von den Innenseiten der übrigen Spiegelflächen (11) unterschiedliche Oberflächenbeschaffenheit aufweist, wobei die unterschiedlichen Oberflächenbeschaffenheiten mit einem das Markierungssignal generierenden Sensor detektiert werden.

10. Verfahren nach einem der Ansprüche 1 bis 9, **dadurch gekennzeichnet, dass** als Referenzelement ein Empfangselement (13) verwendet wird, an dessen Ausgang bei Auftreffen der Sendelichtstrahlen (3) ein Triggersignal generiert wird

11. Verfahren nach einem der Ansprüche 1 bis 9, **dadurch gekennzeichnet, dass** als Referenzelement ein lichtreflektierendes Element verwendet wird, wobei die Sendelichtstrahlen (3) von diesem zum Empfänger (6) reflektiert werden, wodurch an dessen Ausgang ein Triggersignal generiert wird.

**Claims**

1.  Method of operating a barcode reader, which comprises a transmitter transmitting transmitted light beams, a receiver receiving received light beams, an evaluating unit for evaluation of the received signals of the receiver, and a deflecting unit for periodic deflection of the transmitted light beams within a scanning region, wherein the deflecting unit is formed by a motor-driven rotating polygon mirror wheel with several identical mirror surfaces, wherein within a scanning period the transmitted light beams are respectively guided by way of a mirror surface and thus scan the scanning region, and wherein during each period the transmitted light beams are guided in a predetermined deflecting position onto a reference element, whereby a trigger signal is generated from which the start time point of a scan, which is formed by the sequence of received signals detected during a scanning period, is determined, **characterised in that** correction values for the time instants of the received signals of the scans of the further mirror surfaces (11) are derived from the trigger signal for a selected mirror surface (11).

2.  Method according to claim 1, **characterised in that** the trigger signals form the start time instants of the individual scans.

3. Method according to claim 2, **characterised in that** a time difference $\Delta t_1$ of the trigger signal and the first received signal of the scan for the selected mirror surface is formed as reference magnitude for formation of the correction values.

4. Method according to claim 3, **characterised in that** for formation of the correction values the time differences $\Delta t_n$ (n = 2 to 8) of the trigger signals and the first received signals of the further scans are formed and the reference magnitude is subtracted each time from these.

5. Method according to any one of claims 1 to 5, **characterised in that** determination of the correction values takes place during a calibrating process.

6. Method according to claim 5, **characterised in that** the time instants of the received signals of the scans for the further mirror surfaces are corrected by the respective correction values during the working operation of the barcode reader following the calibrating process.

7. Method according to claim 6, **characterised in that** the selection of a mirror surface is carried out by a marking.

8. Method according to claim 7, **characterised in that** a marking signal characterising the selected mirror surface (11) is generated on the basis of the marking.

9. Method according to one of claims 7 and 8, **characterised in that** for formation of the marking at least one section of the inner side of the selected mirror surface (11) has a surface property differing from the inner sides of the remaining mirror surfaces (11), wherein the different surface properties are detected by a sensor generating the marking signal.

10. Method according to any one of claims 1 to 9, **characterised in that** a receiving element (13), at the output of which a trigger signal is generated on incidence of the transmitted light beams (3), is used as reference element.

11. Method according to any one of claims 1 to 9, **characterised in that** a light-reflecting element is used as reference element, wherein the transmitted light beams (3) are reflected by this to the receiver (6), whereby a trigger signal is generated at the output thereof.

**Revendications**

1. Procédé pour faire fonctionner un appareil de lecture de codes à barres, lequel présente un émetteur émettant des rayons lumineux d'émission, un récepteur recevant des rayons lumineux de réception, une unité d'évaluation pour évaluer les signaux de réception du récepteur ainsi qu'une unité de déviation pour dévier périodiquement les rayons lumineux d'émission à l'intérieur d'une zone de balayage, l'unité de déviation étant formée par une roue à miroir polygonal entraînée en rotation par un moteur et présentant plusieurs surfaces réfléchissantes identiques, les rayons lumineux d'émission étant guidés pendant une période de balayage chaque fois par une surface réfléchissante et parcourant ainsi la zone de balayage, et les rayons lumineux d'émission étant guidés pendant chaque période, dans une position de déviation prédéfinie, sur un élément de référence, ce qui a pour effet de générer un signal de déclenchement à partir duquel est déterminé l'instant de départ d'un balayage formé par la suite des signaux de réception déterminés pendant une période de balayage, **caractérisé en ce que** du signal de déclenchement pour une surface réfléchissante (11) sélectionnée sont dérivées des valeurs de correction pour les instants des signaux de réception des balayages des autres surfaces réfléchissantes (11).

2. Procédé selon la revendication 1, **caractérisé en ce que** les signaux de déclenchement forment les instants de départ des différents balayages.

3. Procédé selon la revendication 2, **caractérisé en ce que** l'on forme comme grandeur de référence pour former les valeurs de correction la différence de temps $\Delta t_1$ du signal de déclenchement et du premier signal de réception du balayage pour la surface réfléchissante sélectionnée.

4. Procédé selon la revendication 3, **caractérisé en ce que** pour former les valeurs de correction, on forme les différences de temps $\Delta t_n$ (n = 2 à 8) des signaux de déclenchement et des premiers signaux de réception des balayages suivants et on soustrait chaque fois de celles-ci la grandeur de référence.

5. Procédé selon une des revendications 1 à 5, **caractérisé en ce que** la détermination des valeurs de correction est effectuée pendant un processus de calibrage.

6. Procédé selon la revendication 5, **caractérisé en ce que** pendant le mode de travail succédant au processus de calibrage de l'appareil de lecture de codes à barres, les instants des signaux de réception des balayages pour les autres surfaces réfléchissantes sont corrigés avec les valeurs de correction respectives.

7. Procédé selon la revendication 6, **caractérisé en ce que** la sélection d'une surface réfléchissante est effectuée par un marquage.

8. Procédé selon la revendication 7, **caractérisé en ce qu'**à l'aide du marquage est généré un signal de marquage qui identifie la surface réfléchissante (11) sélectionnée.

9. Procédé selon une des revendications 7 ou 8, **caractérisé en ce que** pour réaliser le marquage, au moins une partie de la face intérieure de la surface réfléchissante (11) sélectionnée présente un état de surface différent des faces intérieures des autres surfaces réfléchissantes (11), les états de surface différents étant détectés par un capteur qui génère le signal de marquage.

10. Procédé selon une des revendications 1 à 9, **caractérisé en ce que** l'on utilise comme élément de référence un élément de réception (13) à la sortie duquel est généré un signal de déclenchement à l'arrivée des rayons lumineux d'émission (3).

11. Procédé selon une des revendications 1 à 9, **caractérisé en ce que** l'on utilise comme élément de référence un élément réfléchissant la lumière, les rayons lumineux d'émission (3) étant réfléchis par celui-ci vers le récepteur (6), à la sortie duquel est alors généré un signal de déclenchement.

# Fig. 1

Fig. 2

Fig. 3

Empfangssignal

Zeit

Zeit

Zeit

Zeit

Zeit

Zeit

Zeit

Zeit

Zeit

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10101985 A1
- WO 9427166 A
- US 6454169 B1